Europäisches Patentamt

European Patent Office

Office européen des brevets

(19)

(11) Veröffentlichungsnummer: **0 259 517
B1**

(12) **EUROPÄISCHE PATENTSCHRIFT**

(45) Veröffentlichungstag der Patentschrift:
16.08.89

(51) Int. Cl.⁴: **B23Q 1/08**

(21) Anmeldenummer: 86112894.0

(22) Anmeldetag: 10.09.86

(54) **Arbeitsspindel mit einer Werkzeugaufnahme für Dreh-, Fräs- und dgl. Werkzeuge im Schieber einer Werkzeugmaschine.**

(43) Veröffentlichungstag der Anmeldung:
16.03.88 Patentblatt 88/11

(45) Bekanntmachung des Hinweises auf die Patenterteilung:
16.08.89 Patentblatt 89/33

(84) Benannte Vertragsstaaten:
**AT BE CH DE FR GB IT LI SE**

(56) Entgegenhaltungen:
**CH-A- 479 352
FR-A- 1 389 501
FR-A- 2 207 781
US-A- 2 203 943
US-A- 3 222 991
US-A- 3 681 879
US-A- 4 480 366
US-A- 4 570 313**

(73) Patentinhaber: **Schiess Aktiengesellschaft
Geschäftsbereich Schiess-Froriep, Schiess Strasse 61,
D-4000 Düsseldorf 11(DE)**

(72) Erfinder: **Noa, Fritz, Dahlacker 4,
D-4052 Korschenbroich 4(DE)**

(74) Vertreter: **Allgeier, Kurt, Friedrichstrasse 24,
D-7888 Rheinfelden(DE)**

ACTORUM AG

# Beschreibung

Die Erfindung betrifft einen Schieber für eine Werkzeugmaschine mit einer daran gelagerten Arbeitsspindel zur Aufnahme von Dreh-, Fräs- oder dgl. Werkzeugen mit Wechsel-Werkzeugaufnahmevorrichtungen für unterschiedliche Werkzeuge wahlweise zum Drehen oder Bohren/Fräsen, mit einer im Inneren einer mittels eines druckmittelbeaufschlagbaren Kolbens axialverschieblichen Hülse in Wälzlagern gelagerten, rotierend antreibbaren und in der anderen Verschiebeposition drehfest arretierbaren Arbeitsspindel.

Das Hauptanwendungsgebiet der Erfindung sind Werkzeugmaschinen, auf denen an Werkstücken in einer Aufspannung sowohl Dreharbeiten wie auch Bohr- oder Fräs- oder dgl. Operationen durchgeführt werden.

Drehmaschinen arbeiten mit einem rotierenden Werkstück und einem lediglich von einer Vorschubeinrichtung gegen das Werkstück bewegten Werkzeug (Drehstahl). Viele Bearbeitungsvorgänge verlangen darüber hinaus ein rotierendes Werkzeug, wie etwa einen Fräskopf oder ein Bohrwerkzeug. Beispielsweise sind bei der Bearbeitung der Nabe einer Kaplanturbine zunächst die Lagerbohrung und die Kopffläche zu drehen und dann am Umfang die Flächen für die Befestigung der Kaplanschaufeln zu fräsen. Dieser Vorgang kann nach Umspannen des Werkstücks von eine Karussell-Drehmaschine auf eine Fräsmaschine erfolgen. Neuerdings bekanntgewordenen Werkzeugmaschinen verfügen über einen Werkzeugspannkopf mit einer Werkzeugaufnahme für rotierende Werkzeuge, wie Fräsköpfe oder Bohrstangen. Der Werkzeugspannkopf wird beim Werkzeugwechsel um 180° gedreht und das im Einsatz befindliche Werkzeug vom Werkstück weg geschwenkt. Da der Werkzeugspannkopf zwei getrennte Aufnahmen für starre und rotierende Werkzeuge besitzt, muß bei jeder Bewegung des Werkzeugkopfes, also z.B. beim Werkzeugwechsel aber auch bei Längs- oder Planbewegungen zu einer Bearbeitungsposition, darauf geachtet werden, daß es nicht zu Kollisionen mit Teilen der Maschine oder des Werkstücks kommt. Derartige Vorrichtungen wurden durch die DE-AS 2 230 143 und durch die AT-PS 379 766 bekannt.

Um deren Nachteile zu vermeiden, hat man versucht, in Abkehr von den bekannten revolverartigen Schwenkköpfen sowohl den Drehantrieb für die Werkzeugaufnahme- und Spannvorrichtung für rotierende Werkzeuge, Fräser, Bohrer u. dgl. wie auch die feststehende Drehmeißelaufnahme einachsig durch geeignete Austauschvorrichtungen am Werkzeugschieber zu bewerkstelligen.

Bei Werkzeugmaschinen auf denen betriebsmäßig in rascher Wechselfolge die Arbeitsverfahren Drehen und Bohren/Fräsen auszuführen sind, müssen nach dem Stand der Technik zwei unterschiedliche Werkzeugaufnahme und -Spannsysteme und damit unterschiedliche Werkzeugträger eingesetzt werden, wobei der Werkzeugträger-Drehen fest am Werkzeugschieber gespannt wird, während der Werkzeugträger-Bohren/Fräsen in einem Vorbaukopf aufgenommen werden muß, der eine umlaufende Arbeitsspindel aufweist. Diese Ausführung bedingt wegen der unterschiedlichen Werkzeug-Befestigungs-Systeme und dem Zeitaufwand für das Anbringen eines kostenaufwendigen Bohr/Fräskopfes auch den Einsatz unterschiedlicher Werkzeugmagazine mit entsprechend unterschiedlichen Magazin-Aufnahmeplätzen.

Andere Lösungen lassen die direkte Aufnahme eines Werkzeugträger-Bohren/Fräsen in der Arbeitsspindel innerhalb des Werkzeugschiebers zu, aber dann müssen zum Anbringen des Werkzeugträgers-Drehen ein entsprechender Adapter an der Unterseite des Meißelschiebers befestigt werden. Eine derartige Lösung ist bekannt aus der DE-C 2 700 286.

Es ist im Laufe der weiteren Entwicklung verschiedentlich versucht worden mittels eines Werkzeugaufnahme- und Spannsystems für die unterschiedlichen Werkzeuge, die die Arbeitsverfahren Drehen wie auch Bohren/Fräsen erfordern, eine einzige Spindelaufnahme zu schaffen.

Dabei steht die Schwierigkeit im Wege, daß die Wälzlagerung der Arbeitsspindel bei den bekannten Vorrichtungen dieser Art, dem Schnittdruck und den Vibrationen ausgesetzt sind, welche beim Arbeitsgang Drehen unvermeidlich auftreten. Diese werden ungedämpft und voll auf die Wälzlager übertragen, die für solche Lastbedingungen konstruktiv nicht ausgebildet sind.

Da die Wälzlager der Arbeitsspindel für den Bohr/Fräs-Betrieb von diesen beim Drehen auftretenden Kräften nicht entlastet sind, treten selbst bei geringeren Schnittkräften sehr bald Lagerschäden auf. Bei Schnittkräften wie sie bei mittleren und großen Werkzeugmaschinen auftreten, und insbesondere bei unterbrochenem Schnitt verbietet sich diese Lösung grundsätzlich. Auch der Verstärkung der Lager durch größere Dimensionierung sind durch das Erfordernis eines kleinen Eintauschdurchmessers des Werkzeugschiebers enge Grenzen gesetzt.

Eine weiterführende Lösung entsprechend der eingangs genannten Gattung ist durch die EP-A 0 148 679 bekannt geworden. Hier findet zwar ein Verschieben des Systems Hülse-Spindel statt; jedoch werden die Wälzlager der für den Arbeitsvorgang Bohren/Fräsen rotierenden Spindel beim Arbeitsvorgang Drehen ebenfalls nicht völlig entlastet, weil mittels der durch den Druckmittelkolben axialverschiebbaren Spindel eine auf das Drehwerkzeug wirksame Spannfunktion ausgeübt wird, und somit durch die Spannkräfte auch der Schnittdruck und somit auch Stöße auf die Spindellagerung übertragen werden. Es sind auch zwei gänzlich unterschiedliche Werkzeugträger-Systeme erforderlich und damit auch für jedes System unterschiedliche Werkzeugmagazine, Magazingreifer usw.

Der Erfindung liegt daher die Aufgabe zugrunde, eine Arbeitsspindel der eingangs genannten Gattung so weiterzubilden, daß mittels ein und desselben Werkzeugaufnahme- und Spannsystems ohne Anbringen von speziellen Vorsatz-Köpfen oder Adaptervorrichtungen sowohl ein Werkzeugträger-Drehen als auch ein Werkzeugträger-Bohren/Fräsen in schneller Wechselfolge aufgenommen werden können. Es soll ein einheitliches Werkzeug-Befestigungs-System geschaffen werden, damit die Werkzeuge für die verschiedensten Arbeitsgänge außer Drehen, also Bohren, Fräsen, Senken, Reiben, Gewindeschneiden in einem einheitlichen Magazin abgelegt werden können, und bei der außerdem vorgesehen ist, daß die Schnittkräfte und Vibrationen, wie sie beim Drehen an mittleren und großen Werkzeugmaschinen, insbesondere bei unterbrochenem Schnitt auftreten, von den Wälzlagern der Lagerung für die rotierende Bewegung ferngehalten werden.

Die Lösung dieser Aufgabe ist gekennzeichnet durch ein einheitliches Werkzeugaufnahme- und Spannsystem für die mit gleichgeformten Werkzeugträgern ausgerüstete unterschiedliche Werkzeuge, bei dem durch Verschieben aus der erstgenannten Verschiebeposition der axialverschieblichen Hülse in die zweitgenannte Verschiebeposition die Wälzlager durch Verschieben ihrer Innenringe gegenüber ihren Außenringen um einen zulässig großen Betrag außer Funktion gesetzt sind. Durch diese Maßnahme sind die Wälzlager von dem Schnittdruck und den Stößen infolge des Dreh-Vorganges entlastet. Ein weiteres wesentliches Merkmal der Erfindung besteht darin, daß in der anderen Verschiebeposition der axialverschieblichen Hülse zum Einsatz eines Werkzeugträgers-Bohren/Fräsen die Wälzlager-Innenringe in ihrer Funktionsposition gegenüber ihren Außenringen mittels der unter einer Druckspannung stehenden axialverschieblichen Hülse gehalten sind. Dadurch sind die Lagerringe in ihrer Normallage festgehalten.

Ein weiteres bedeutendes Erfindungsmerkmal ist ferner darin zu sehen, daß die Druckspannung auf die Wälzlager-Ringe in der Funktionsposition durch Variieren der Druckbeaufschlagung der betreffenden Kolbenfläche der axialverschieblichen Hülse an die eingestellte Spindeldrehzahl anpaßbar ist.

Weitere bedeutsame Besonderheiten und Vorteile gehen aus dem in der Zeichnung dargestellten Ausführungsbeispiel hervor, welches im folgenden beschrieben und näher erläutert ist:

Der Werkzeugschieber 1 einer Werkzeugmaschine hat in seinem Inneren eine Bohrung 2, die eine axialverschiebbar Hülse 3 aufnimmt. Letztere ist mit einem beidseitig druckmittelbeaufschlagbaren Ringkolben 3a versehen, dessen Kolbenflächen 4 und 5 über die Leitungen 6 und 7 druckmittelbeaufschlagbar sind.

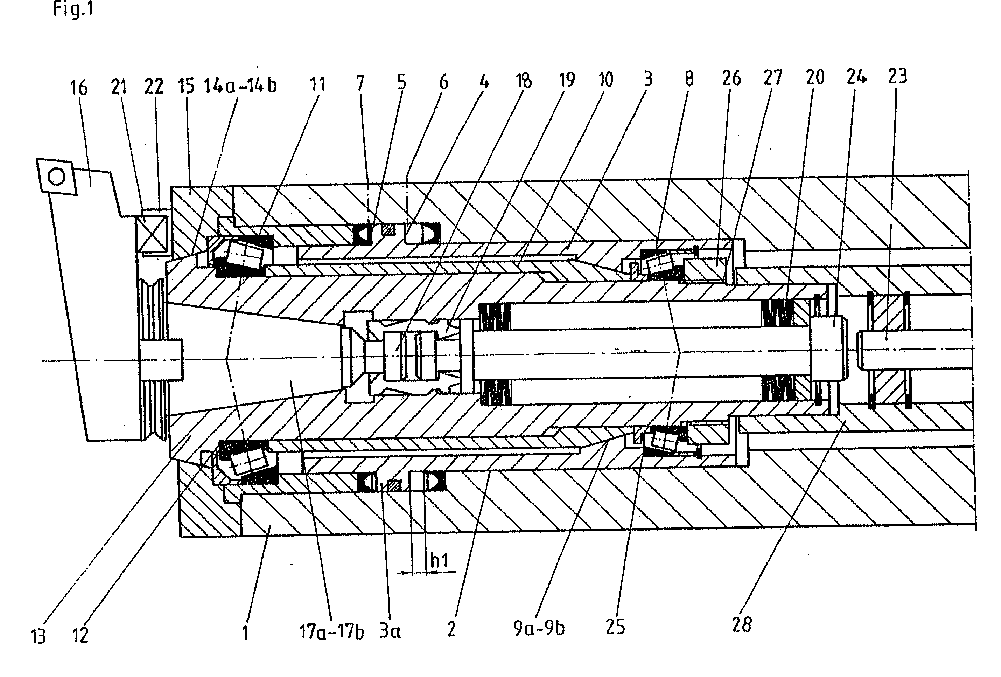

Beim Arbeitsverfahren Drehen Fig.1 wird die Kolbenfläche 4 über die Leitung 6 mit Druck beaufschlagt und die Hülse 3 verschiebt sich axial um den Betrag $h_1$ in Richtung zum unteren (bzw. vorderen) Ende des Werkzeugschiebers 1. Dabei wird zunächst das hintere Wälzlagerpaar 8 durch Verschieben des Außenringes entlastet und die Hülse 3 legt sich dann mit ihrem konischen Sitz 9a am konischen Sitz 9b der Zwischenhülse 10 an und übt dort eine Klemmwirkung aus.

Die Zwischenhülse 10 liegt mit dem zur WerkzeugschieberUnterseite(bzw.Vorderseite) weisenden Ende am Innenring der vorderen Lagereinheit 11 an,der wiederum am Bund 12 der Arbeitsspindel 13 anliegt und über diesen Bund wird die Arbeitsspindel 13 in der Weise nach unten (bzw. vorne)geschoben, daß darauf die vordere Wälzlagereinheit 11 durch Verschieben des Innenringes entlastet wird und die Arbeitsspindel 13 dann mit ihrem konisch ausgebildeten Sitz 14a an den ebenfalls konischen Sitz 14b des Lagerflansches 15 eine Klemmwirkung ausübt, wobei der Lagerflansch 15 an der Unterseite (bzw. Vorderseite) des Werkzeugschiebers 1 angeordnet ist.

Bei weiterem Druckaufbau vor der Kolbenfläche 4 wird nun die Arbeitsspindel 13 über die beiden konischen Sitze 9a-9b zwischen Hülse 3 und Zwischenhülse 10 und 14a-14b zwischen Arbeitsspindel 13 und Lagerflansch 15 festgeklemmt und die beim Drehen auftretenden Schnitt- und Vorschubkräfte und insbesondere die bei unterbrochenem Schnitt auftretenden Stöße werden direkt über die konischen Sitze 14a-14b und 9a-9b in den Werkzeugschieber 1 geleitet. Die Wälzlagereinheiten 8 und 11 der Arbeitsspindel 13 sind damit vollkommen entlastet und die für das Arbeitsverfahren Bohren/Fräsen erforderliche hohe Genauigkeit dieser Lagerung bleibt dadurch erhalten, daß eine Beschädigung vermieden wird.

Der Werkzeugträger-Drehen 18 wird mit seinem Steilkegel 17a in der Steilkegelbohrung 17b der Arbeitsspindel 13 aufgenommen und in bekannter Weise über den Anzugsbolzen 18 und die Spannzange 19 die über das Tellerfederpaket 20 geschlossen wird geklemmt. Der Werkzeugträger-Drehen stützt sich zusätzlich mit einem sogenannten Mitnehmerstein 21 in einer Nut 22 des Lagerflansches 15 ab, um das auf den Werkzeugträger-Drehen wirkende Drehmoment aufzunehmen.

Das Lösen des Werkzeugträgers-Drehen erfolgt mittels der druckmittelbetätigten Lösestange 23, die das Tellerfederpaket 20 über die Führungsstange 24 zusammendrückt, damit die Spannzange 19 öffnet und der Werkzeugträger-Drehen 16 wird über ein nicht dargestelltes Greifersystem aus dem Werkzeugschieber 1 entnommen.

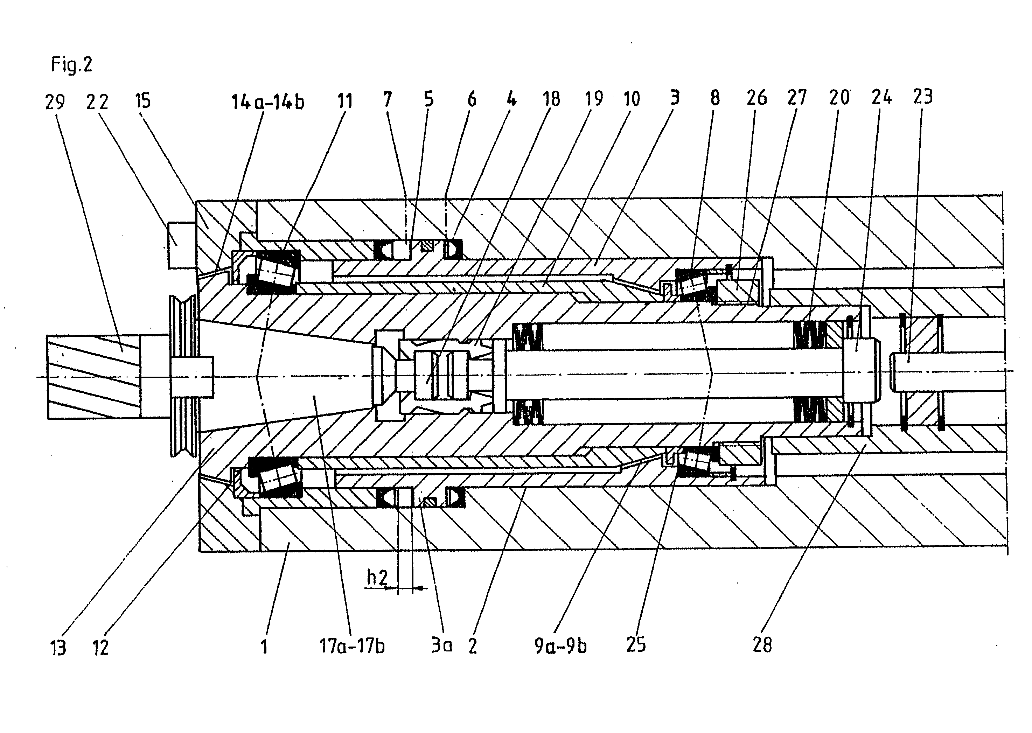

Beim Arbeitsverfahren Bohren/Fräsen Fig.2 wird die Kolbenfläche 5 des Kolbens 3 a über die Leitung 7 mit Druck beaufschlagt. Dadurch verschiebt sich die Hülse 3 um den Betrag $h_2$ in Richtung zur Oberseite (bzw. Innenseite) des Werkzeugschiebers 1, legt sich mit ihrer Schulter 25 an den Außenring der Wälzlagereinheit 8 an und bringt diese in ihre Funktionsstellung. Darauf wird der konische Klemmsitz 9a-9b zwischen der Hülse 3 und der Zwischenhülse 10 gelöst.

Bei weiterem Druckaufbau vor der Kolbenfläche 5 wirkt die aufgebrachte Druckkraft über die Wälzlagereinheit 8 auf einen Gewindering 26 der über das Gewinde 27 mit der Arbeitsspindel 13 verbunden ist und verschiebt diese weiter nach oben (innen). Dabei löst sich der konische Klemmsitz 14a-14b zwischen der Arbeitsspindel 13 und dem Lagerflansch 15, und darauf wird über die Schulter 12 der Arbeitsspindel 13 die vordere Wälzlagereinheit 11 in ihrer Funktionsstellung festgelegt und zum Tragen gebracht. Dabei wird diese Funktionsstellung der vorderen Wälzlagereinheit 11 durch den Druck auf die Kolbenfläche 5 dadurch dauernd aufrechterhalten, daß die unter Druckspannung stehende Hülse 3 über die unter gleich hoher Druckspannung stehende Wälzlagereinheit 8 und über die mit der ersteren durch die Verschraubung 26, 27 verbundene Arbeitsspindel 13 diese Funktionsdruckkraft auf den anliegenden Wälzlager-Innenring überträgt. Durch Variieren der auf die Kolbenfläche 5 wirkenden Druckmittelspannung kann die betriebsmäßige Verspannung zwischen den Wälzlager-Innen- und Außenringen in den zulässigen Grenzen derart an die Arbeitsweise und die dazu eingestellte Spindeldrehzahl stufenlos angepaßt werden, daß bei niedrigen Drehzahlen eine hohe Verspannung und bei hohen Drehzahlen eine wesentlich geringere Verspannung eingestellt werden kann, um der Lagerwärmung entgegenzuwirken.

In der Zeichnung Fig. 2 ist die Stellung dargestellt, in welcher die Arbeitsspindel 13 für den Arbeitsvorgang Bohren/Fräsen einsatzbereit ist. Der Rotationsantrieb der Arbeitsspindel 13 erfolgt über eine Hohlwelle 28, die in der Rotationsachse im Zentrum des Werkzeugschiebers 1 angeordnet ist.

Das Spannen und Lösen der Werkzeugträger-Fräsen 29 erfolgt in der gleichen Weise wie beim Arbeitsvorgang-Drehen.

Durch das Verschieben der Lagerringe der Wälzlager gegeneinander bei der Arbeitsweise Drehen werden die Wälzlager vom Schnittdruck und den Stößen bei den Drehvorgängen vollständig entlastet. Die axial und radial gerichteten Kräfte beim Drehen werden vom Werkzeugträger unmittelbar auf den Werkzeugschieber übertragen und von diesem aufgenommen, ohne daß die vom Werkzeugträger gelöste Wälzlagern mit dem Werkzeugträ ger bzw. dessen Spannelementen in einer körperlichen Berührung steht. Dadurch sind Beschädigungen der Wälzlager durch Kräfteeinwirkungen beim Drehen ausgeschlossen, so daß deren Lebensdauer nicht beeinträchtigt wird.

Ebenso wesentlich ist die Möglichkeit, die Verspannung der Wälzlagerringe gegeneinander der Spindeldrehzahl anzupassen, was dadurch ermöglicht wird, daß in der Verschiebeposition Drehen der axialverschiebbaren Hülse die Lagerringe dauernd unter dem variablen Anpreßdruck infolge der steuerbaren Druckmittelbeaufschlagung der hier wirksamen Kolbenseite stehen.

## Patentansprüche

1. Schieber für eine Werkzeugmaschine umfassend eine darin gelagerte Arbeitsspindel mit Wechsel-Werkzeugaufnahmevorrichtungen für unterschiedliche Werkzeuge wahlweise zum Drehen oder Bohren/Fräsen, mit einer im Inneren einer mittels eines druckmittelbeaufschlagbaren Kolbens (3a) axialverschieblichen Hülse (3) in Wälzlagern (8, 11) gelagerten, in einer Verschiebeposition rotierend antreibbaren und in der anderen Verschiebeposition drehfest arretierbaren Arbeitsspindel (13) gekennzeichnet durch ein einheitliches Werkzeugaufnahme- und Spannsystem für die mit gleichgeformten Werkzeugträgern (17a, 17b) ausgerüstete antreibbare bzw. arretierbare Werkzeuge, bei dem durch Verschieben aus der erstgenannten Verschiebeposition der axialverschieblichen Hülse (3) in die zweitgenannte Verschiebeposition die Wälzlager (8, 11) durch Verschieben ihrer Innenringe gegenüber ihren Außenringen um einen zulässig großen Betrag außer Funktion gesetzt sind.

2. Schieber nach Anspruch 1, dadurch gekennzeichnet, daß die in der erstgenannten Verschiebeposition der axialverschieblichen Hülse (3) zum Einsatz eines Werkzeugträgers Bohren/Fräsen die Wälzlager-Innenringe gegenüber ihren Außenringen in ihrer Funktionsposition mittels der unter einer Druckspannung stehenden axialverschieblichen Hülse (3) gehalten sind.

3. Schieber nach Anspruch 2, dadurch gekennzeichnet, daß die Druckspannung auf die Wälzlager-Ringe in der Funktionsposition durch Variieren der Druckbeaufschlagung einer betreffenden Kolbenfläche (5) der axialverschieblichen Hülse (3) an die eingestellte Spindeldrehzahl anpaßbar ist.

4. Schieber nach einem der Ansprüche 1 bis 3, dadurch gekennzeichnet, daß die Arbeitsspindel (13) mittels der druckmittelbetätigbar axialverschieblichen Hülse (3) ebenfalls axialverschieblich ist.

5. Schieber nach wenigstens einem der Ansprüche 1 bis 4, dadurch gekennzeichnet, daß die axialverschiebbare Hülse (3) mit dem Kolben (3a) einen sich in Richtung entgegen der Richtung zu einem stirnseitigen Lagerflansch (15) des Schiebers (1) verjüngenden Innen-Konus (9a) aufweist, der in der Verschiebeposition für den Werkzeugträger-Drehen an einen Außen-Gegenkonus (9b) einer auf der Arbeitsspindel (13) sitzenden und mit dieser umlaufenden Zwischenhülse (10) angepreßt und dadurch die Arbeitsspindel (13) axialverschoben und mit ihrem sich nach unten (vorne) verjüngenden Konus (14a) an einen Innenkonus (14b) des Lagerflansches (15) angepreßt ist.

6. Schieber nach Anspruch 5, dadurch gekennzeichnet, daß die Innenringe der Wälzlagereinheiten (8, 11) mittels der Zwischenhülse (10) gegen einen Bund der Arbeitsspindel (13) axial verspannt sind.

7. Schieber nach wenigstens einem der Ansprüche 1 bis 6, dadurch gekennzeichnet, daß der (die) Innenring(e) der unteren (vorderen) Wälzlagereinheit (11) mittels einer Spannhülse gegen den Bund (12) der Arbeitsspindel (13) und der (die) Außenring (e) der oberen (hinteren) Wälzlagereinheit (8) gegen einen Bund der axialverschieblichen Hülse (3) verspannt sind.

## Claims

1. Slide for a machine tool comprising a work spindle lodged therein with change-type holding fixtures for different tools, optional for turning or drilling respectively milling operations, with a work spindle (13) lodged on roller bearings (8, 11) in the interior of a bush (3) which can be axially displaced by a piston (3a) admitting a pressure medium, in one displacement position rotatively drivable and in the other displacement position firmly lockable to prevent any rotation whatever, characterized by a uniform holding and clamping system for driveable and/or lockable tools fitted with identically shaped heads (17, 17b), with which by shifting from the first displacement position of the axially displaceable bush (3) to the second displacement position, the roller bearaings (8, 11), by shifting their internal rings against their external rings, are rendered inoperative to an allowable extent.

2. Slide acc. to claim 1, characterized in that in the first displacement position of the axially displaceable bush (3) for use of a drilling/milling head the internal rings of the roller bearings are held in their operating position against their external rings, by the axially displaceable bush (3) being under compressive strain.

3. Slide acc. to claim 2, characterized in that the compressive strain onto the rings of the roller bearings, when in operating position, can be matched to the set speed of the spindle by varying the pressure admittance onto a certain piston area (5) of the axially displaceable bush (3).

4. Slide acc. to one of the claims 1 to 3, characterized in that the work spindle (13) is also axially movable by the action of the axially displaceable bush (3) which is operated by a pressure medium.

5. Slide acc. to at least one of the claims 1 to 4, characterized by the axially displaceable bush (3) showing the piston (3a) and an internal cone (9a), tapered contrary to the direction of a bearing flange (15) of the slide (1) on the face, which, in the displacement position for the turning head, is pressed against an external countercone (9b) of an intermediate bush (10) fitted to the work spindle (13) and rotating with the latter, thereby axially displacing the work spindly (13) and pressing it with its cone (14a) tapering downwards (to the front), to an internal cone (14b) of the bearing flange (15).

6. Slide acc. to claim 5, characterized in that the internal rings of the roller bearing units (8, 11) are axially pressed against a collar of the work spindle (13) by the intermediate bush (10).

7. Slide acc. to at least one of the claims 1 to 6, characterized in that the internal ring(s) of the lower (front) roller bearing unit (11) are pressed by an adaptor sleeve against the collar (12) of the work spindle (13) and the external ring(s) of the upper (rear) roller bearing unit (8) against a collar of the axially displaceable bush (3).

## Revendications

1. Coulisse pour machine-outil comportant un arbre moteur y logé avec des dispositifs de raccordement destinés au changement des outils différents pour, au choix, des opérations de tournage ou perçage/fraisage, avec un arbre moteur (13) à l'intérieur d'un fourreau (3) décalable axialement par un piston (3a) qui peut être actionné par un moyen de pression, arbre moteur (13) logé dans des roulements à galets (8, 11) et, à l'une des positions de déplacement, entraînable pour rotation et, à l'autre position de déplacement, arrêtable pour éviter cette rotation, dûment caractérisée par un système uniforme de raccordement et de monage pour outils entraînables respectivement arrêtables et munis des porte-outil (17a, 17b) de forme indentique, avec lequel, par déplacement de la première position du fourreau (3) décalable axialement à la deuxième position, les roulements à galets (8, 11) sont, grâce au déplacement de leurs bagues intérieures par rapport à leurs bagues extérieures, mis hors de fonctionnement dans une mesure admissible.

2. Coulisse selon revendication 1, dûment caractérisée par ce que les bagues intérieures de roulement à galets, à la première position de déplacement du fourreau (3) décalable axialement et destiné à l'utilisation d'un porte-outil pour perçage/fraisage, sont tenus, par rapport à leurs bagues extérieures, en leur position de fonctionnement moyennant le fourreau (3) décalable axialement et sous tension de compression.

3. Coulisse selon revendication 2, dûment caractérisée par ce qu'en position de fonctionnement, la tension de compression aux bagues de roulement à galets peut être adaptée à la vitesse d'arbre choisie par une admission variée de la pression à une surface de piston (5) concernée du fourreau (3) décalable axialement.

4. Coulisse selon l'une des revendications 1 à 3, dûment caractérisée par un arbre moteur (13) qui est également décalable en sens axial par l'effet du fourreau (3) décalable axialement et actionné par le moyen de pression.

5. Coulisse selon, au moins, l'une des revendications 1 à 4, dûment caractérisée par ce que le fourreau (3) décalable axialement, montre avec le piston (3a), un cône intérieur qui s'effile contrairement au sens vers la face de la collerette d'appui (15) de la coulisse (1) lequel, en position de déplacement pour le porte-outil tournage, est pressé à un contrecône (9b) extérieur d'un fourreau intermédiaire (10) qui se trouve sur l'arbre moteur (13) et tourne avec celui-ci, tout en déplaçant axialement l'arbre moteur (13) et pressant son cône (14a) s'effilant vers le bas (le front) à un cône intérieur (14b) de la collerette d'appui (15).

6. Coulisse selon revendication 5, dûment caractérisée par ce que les bagues intérieures des unités de roulement à galets (8, 11) sont tendues axialement contre un épaulement de l'arbre moteur (13) par le fourreau intermédiaire (10).

7. Coulisse selon, au moins, l'une des revendications 1 à 6, dûment caractérisée par ce que la (les) bague(s) intérieure(s) de l'unité de roulement à galets (11) inférieure (frontale) est (sont) tendue(s), moyennant une douille de serrage, contre l'épaulement (12) de l'arbre moteur (13), et la (les) bague(s) extérieure(s) de l'unité de roulement à galets (8) supérieure (arrière) contre un épaulement du fourreau (3) décalable axialement.

Fig.1

Fig.2